# EUROPÄISCHE PATENTANMELDUNG

(11) **EP 2 851 761 A2**
(43) Veröffentlichungstag der Anmeldung: **25.03.2015**
(21) Anmeldenummer: 14171238.0
(22) Anmeldetag: 05.06.2014
(51) Int. Cl.: G05D 23/30

(54) **Schaltung für einen Verdunster**

(30) Priorität: 12.07.2013 DE 102013107428
(71) Anmelder: DBK David + Baader GmbH, Nordring 26 76761 Rülzheim (DE)
(72) Erfinder: Schäffner, Wolfgang, 76773 Kuhardt (DE); Werling, Wolfgang, 76770 Hatzenbühl (DE); Wiener, Manfred, 67160 Salmbach (FR)
(74) Vertreter: Winter, Brandl, Fürniss, Hübner, Röss, Kaiser, Polte - Partnerschaft mbB

(57) **Zusammenfassung**

Offenbart ist eine Schaltung mit einem Temperaturregler mit dem ein elektrischer Kontakt zwischen einem ersten Heizelement und einer Stromquelle auf- und zusteuerbar ist. Ab einer Abschalttemperatur des Temperaturreglers wird hierbei der Kontakt abgeschaltet und bei einer Einschalttemperatur, die unterhalb der Abschalttemperatur liegt, eingeschaltet. Mit einem zweiten Heizelement ist der Temperaturfühler auf seine Abschalttemperatur erwärmbar. Hierfür ist das zweite Heizelement benachbart zu diesem angeordnet.

Des Weiteren ist ein Verdunster offenbart, der eine derartige Schaltung aufweist, womit mit dem ersten Heizelement ein Fluid in einer Verdunstungskammer erwärmt werden kann und der Temperaturfühler durch das Fluid gekühlt werden kann.

## Beschreibung

Die Erfindung geht aus von einer Schaltung, insbesondere einer Trockenlaufabschaltung, für einen Verdunster gemäß dem Oberbegriff des Patentanspruchs 1. Des Weiteren betrifft die Erfindung einen Verdunster, insbesondere einen Durchlaufverdunster, mit einer derartigen Schaltung.

Verdunster werden bei einer Vielzahl von technischen Vorrichtungen eingesetzt, um (insbesondere kondensierte) Flüssigkeiten, die sich in diesen Vorrichtungen ansammeln, abzuführen.

In der Druckschrift DE 10 2005 062 616 A1 ist ein derartiger Verdunster zum Abführen der Flüssigkeit aus einer elektrischen Vorrichtung, offenbart. Bei der elektrischen Vorrichtig handelt es sich beispielsweise um einen Schaltschrank, einen Kondenstrockner oder um eine Klimaanlage. Abgeführte Flüssigkeit wird bei dem Verdunster in einer Verdunstungskammer aufgefangen. Zum Zuführen der Flüssigkeit hat die Verdunstungskammer einen Zuführanschluss. Die in die Verdunstungskammer zugeführte Flüssigkeit wird dann über ein Heizelement mit Wärme beschickt wodurch sie verdampft und über einen Abführanschluss abgeführt wird. Bei dem Heizelement handelt es sich um ein PTC-Heizelement. Dieses ist entweder dauerbestromt oder wird über eine Steuerung bedarfsgerecht gesteuert. Ist es dauerbestromt, so verbraucht das Heizelement auch dann Energie, wenn in der Verdunstungskammer die Flüssigkeit vollständig verdampft ist, was nachteilig zu einem hohen Energieverbrauch führt. Ist zusätzlich eine Schaltung vorgesehen zum Steuern des Heizelements, so wird über einen Sensor ein Pegelstand der Flüssigkeit erfasst und das Heizelement nur ab einem bestimmten Pegelstand betrieben. Die Steuerung führt wiederum nachteilig zu einem hohen vorrichtungstechnischen Aufwand des Verdunsters.

Das Dokument EP 1 576 913 B1 offenbart eine weitere Ausführungsform einer Steuerung für ein PTC-Heizelement. Dieses wird hierbei ebenfalls zum Verdampfen einer Flüssigkeit eingesetzt. Ist die gesamte Flüssigkeit verdampft, so sinkt eine Leistungsaufnahme des Heizelements aufgrund des PTC-Effekts ab. Dieses Absenken der Leistungsaufnahme kann von einer Steuerung erfasst werden und das Heizelement dann beispielsweise von der Steuerung ausgeschaltet werden.

Dem gegenüber liegt der Erfindung die Aufgabe zugrunde, eine Schaltung, insbesondere für einen Verdunster, und einen Verdunster zu schaffen, die vorrichtungstechnisch einfach ausgestaltet sind und einen vergleichsweise geringen Energiebedarf aufweisen.

Die Aufgabe hinsichtlich der Schaltung wird gelöst gemäß den Merkmalen des Patentanspruchs 1 und hinsichtlich des Verdunster gemäß den Merkmalen des Patentanspruchs 10.

Sonstige vorteilhafte Weiterbildungen der Erfindung sind Gegenstand weiterer Unteransprüche.

Erfindungsgemäß ist eine Schaltung, insbesondere eine Trockenlaufabschaltung, insbesondere ein Low-Energy-Switch, für einen Verdunster bzw. Verdampfer vorgesehen. Diese hat einen Thermostaten, also einen Temperaturregler mit einem Temperaturfühler insbesondere zum Erfassen einer Temperatur eines Fluids. Der Temperaturregler steuert einen elektrischen Kontakt zwischen einer Stromquelle und einem ersten elektrischen Heizelement insbesondere zum Erwärmen des Fluids. Der Kontakt ist hierbei vom Temperaturregler geöffnet, wenn eine vorbestimmte erste Temperatur erreicht und/oder überschritten ist, die vom Temperaturfühler erfasst ist. Der Kontakt ist geschlossen, wenn eine weitere vorbestimmte, insbesondere geringere zweite Temperatur erreicht und/oder unterschritten ist. Neben dem ersten elektrischen Heizelement ist erfindungsgemäß ein zweites elektrisches Heizelement zum Erwärmen des Temperaturfühlers vorgesehen, dass an die Stromquelle angeschlossen ist. Es weist vorzugsweise eine geringere Leistung als das erste Heizelement auf und ist dem Temperaturfühler beigeordnet. Das zweite Heizelement kann dauerbestromt sein.

Diese Lösung hat den Vorteil, dass zum Steuern des ersten elektrischen Heizelements keine aufwendige Steuerung, wie beispielsweise bei dem eingangs erläuterten Stand der Technik, eingesetzt werden muss. Wird beispielsweise das erste Heizelement verwendet, um ein Fluid zu verdampfen, so wird der Temperaturfühler nach dem Verdampfen des Fluids oder bei einem vorbestimmten Pegelstand des Fluids von dem ersten Heizelement und dem zweiten Heizelement erhitzt. Überschreitet er dabei die erste vorbestimmte, insbesondere hohe Temperatur, so trennt der Temperaturregler das erste Heizelement vorteilhafterweise von der Stromquelle. Es ist dann lediglich das zweite eine geringere Leistung aufweisende Heizelement im Einsatz, um den Temperaturregler bzw. seinen Temperaturfühler derart zu erwärmen, dass dieser seine erste Temperatur bzw. Abschalttemperatur beibehält. Die vom Temperaturfühler erfasste Temperatur sinkt erst dann wieder, wenn zu verdampfendes Fluid vorhanden ist oder den vorbestimmten Pegelstand überschreitet. Über das Fluid kann dann der Temperaturfühler bzw. der Temperaturregler gekühlt werden. Ist die zweite, insbesondere geringere Temperatur bzw. Anschalttemperatur durch das Kühlen erreicht, so wird das erste Heizelement über den Temperaturregler wieder mit der Stromquelle verbunden und kann zum Verdampfen des Fluids eingesetzt werden. Somit führt die erfindungsgemäße Schaltung dazu, dass das erste Heizelement mit geringen vorrichtungstechnischen Mitteln nur bei Bedarf zugeschaltet wird. Es muss hierbei lediglich ein zweites Heizelement mit dem Temperaturregler bzw. dessen Temperaturfühler gekoppelt sein.

Die Beiordnung des zweiten Heizelements zum Temperaturfühler erfolgt dabei vorzugsweise derart, dass der Temperaturfühler bei Unterschreiten eines Pegelstandes des Fluids vom ersten Heizelement auf die erste Temperatur aufheizbar ist und bei Überschreiten des Pegelstandes auf die zweite Temperatur abkühlbar ist.

Denkbar wäre auch zwei Pegelstände eines Fluids vorzusehen. Bei Erreichen und/ oder Überschreiten eines ersten Pegelstands könnte dann die zweite vom Temperaturfühler erfasste Temperatur erreicht und/oder unterschritten sein, womit das erste Heizelement eingeschaltet ist. Bei Erreichen und/oder Unterschreiten des zweiten Pegelstands könnte dann die erste vom Temperaturfühler erfasste Temperatur erreicht und/oder überschritten sein, womit das erste Heizelement ausgeschaltet ist. Der erste Pegelstand ist vorzugsweise höher als der zweite Pegelstand.

Vorzugsweise sind der Temperaturregler und das erste Heizelement einfach elektrisch in Reihe angeordnet. Um das zweite Heizelement dauerhaft zu bestromen kann dieses dann einfach elektrisch parallel zu dem Temperaturregler und dem ersten Heizelement angeordnet sein.

Mit Vorteil liegt die erste Temperatur bzw. Abschalttemperatur des zweiten Heizelements überhalb einer Verdampfungstemperatur des zu erwärmenden Fluids, bei dem es sich um Wasser handeln kann. Typischerweise ist die erste Temperatur deutlich höher als 100°C, beispielsweise > 130°C. Die zweite Temperatur bzw. Anschalttemperatur kann dann zwischen der Verdampfungstemperatur und der ersten Temperatur liegen. Beispielsweise beträgt die zweite Temperatur etwa 100 °C, etwa 105 °C oder etwa 110 °C.

Es hat sich als ausreichend herausgestellt, wenn eine Leistung des zweiten Heizelements geringer als die Leistung des ersten Heizelements ist und beispielsweise etwa 10 % der Leistung des ersten Heizelements beträgt. Beispielsweise liegt die Leistung des zweiten Heizelements zwischen 3 und 4 Watt. Eine minimale Leistung des ersten Heizelements bzw. Trockenlaufleistung kann beispielsweise < 40 Watt betragen, während eine Verdampfungsleistung zwischen 100 und 180 Watt liegen kann. Das erste Heizelement ist vorzugsweise derart ausgestaltet und angeordnet, dass mit diesem zwischen 100 und 160 ml pro Stunde, insbesondere 120 bis 150 ml pro Stunde von einem Fluid verdampft werden können. Spannungsbereiche zum Betreiben der Heizelemente liegen üblicherweise zwischen 100 und 240 Volt beziehungsweise zwischen 400 und 460 Volt. Auch ein Betrieb mit Niederspannung oder einem Spannungsbereich zwischen 240 und 400 Volt ist bei entsprechender Auslegung möglich.

Bevorzugterweise ist der Temperaturregler mit seinem Temperaturfühler kompakt in einem Reglergehäuse angeordnet. Das zweite Heizelement kann dann an das Reglergehäuse angrenzen oder in dem Reglergehäuse angeordnet sein und somit zusammen mit dem Temperaturregler eine kompakte Einheit bilden, die einfach montierbar ist. Vorteilhafterweise ist in beiden Fällen der Temperaturfühler unmittelbar von dem zweiten Heizelement erwärmt und es können sowohl der Temperaturregler mit seinem Temperaturfühler als auch das zweite Heizelement bei einem vorhandenen Fluid, das von dem ersten Heizelement verdampft werden soll, gekühlt werden.

Ein Gehäuse des zweiten Heizelements, insbesondere wenn dieses außerhalb des Reglergehäuses angeordnet ist, besteht vorzugsweise aus einem gut wärmeleitenden Material wie Silikon und/oder Magnesiumoxid (MgO).

Das zweite Heizelement ist in weiterer Ausgestaltung vorzugsweise mit zwei Litzen zur elektrischen Kontaktierung verlötet und mit Silikon umspritzt. Die Litzen können dann aus der Umspritzung herausgeführt sein.

Wie vorstehend bereits erläutert, kann das erste Heizelement zur Zufuhr von Wärme in ein mit dem Temperaturfühler in thermischen Kontakt bringbaren Fluid eines begrenzten Bereichs (Verdunstungskammer) eingesetzt sein.

Mit Vorteil ist das zweite Heizelement derart zum Temperaturfühler angeordnet, dass bis zu einer bestimmten Menge des zu erwärmenden Fluids in dem begrenzten Bereich (Verdunstungskammer), der Temperaturfühler über das zweite Heizelement auf bzw. über die erste Temperatur erwärmbar ist. Ab der bestimmten Menge des zu erwärmenden Fluids ist dann der Temperaturfühler auf bzw. unter die zweite Temperatur abkühlbar. Dies führt dazu, dass auf einfache Weise erst ab einem bestimmten Pegelstand des zu erwärmenden Fluids das erste Heizelement bestromt ist. Hierfür ist im Unterschied zum Stand der Technik keinerlei Sensorik notwendig, um den Pegelstand des Fluids zu messen.

Mit Vorteil handelt es sich bei den Heizelementen um PTC (Positive Temperature Coefficient) -Heizelemente.

Erfindungsgemäß ist ein Verdunster bzw. Verdampfer, insbesondere ein Durchlaufverdunster, mit einer erfindungsgemäßen Schaltung vorgesehen. Der Verdunster weist hierbei eine Verdunstungskammer mit einem Zufuhranschluss für ein flüssiges Fluid und einem Abführanschluss für das dampfförmige Fluid auf. Ein derartiger Verdunster ist vorrichtungstechnisch äußerst einfach ausgestaltet und gleichzeitig mit einem geringen Energieaufwand betreibbar.

Vorzugsweise ist der Verdunster derart ausgestaltet, dass erst bei Erreichen und/ oder Überschreiten eines ersten hohen Pegelstands des Fluids in der Verdunstungskammer vom Temperaturfühler ein Erreichen und/oder Unterschreiten der zweiten, insbesondere geringen Temperatur erfassbar ist, womit das erste Heizelement eingeschaltet ist. Des Weiteren ist der Verdunster vorzugsweise derart ausgestaltet, dass erst bei Erreichen und/oder Unterschreiten eines zweiten niedrigen Pegelstands vom Temperaturfühler ein Erreichen und/oder Überschreiten der ersten, insbesondere hohen Temperatur erfassbar ist, womit das erste Heizelement ausgeschaltet ist. Somit wird das erste Heizelement erst dann zugeschaltet, wenn sich in der Verdunstungskammer eine vorbestimmte Menge an Fluid angesammelt hat. Es wird des Weiteren erst dann abgeschaltet, wenn die vorbestimmte Menge an Fluid verdampft ist. Das erste Heizelement wird somit nicht bei Erreichen und Überschreiten eines einzigen Pegelstands eingeschaltet und bei Unterschreiten dieses Pegelstandes wieder ausgeschaltet, sondern in Abhängigkeit von zwei unterschiedlichen Pegelständen betrieben, womit der Verdunster funktional gesehen eine Hysterese aufweist. Somit schützt eine derartige Hysterese den Verdunster vor kurzzeitigen Ein-und Ausschaltvorgängen. Durch die zwei Pegelstände wird der Thermostat somit nicht ständig ein- und ausgeschaltet, sobald ein Fluid sich in der Verdunstungskammer befindet, womit seine Lebensdauer äußerst lang ist, wenn beispielsweise davon ausgegangen wird, dass der Thermostat für 100 000 Schaltzyklen geeignet ist. Außerdem wird auch das erste Heizelement durch die Berücksichtigung der zwei Pegelstände deutlich weniger oft betätigt, wodurch auch dessen Lebensdauer steigt. Durch die geringe Anzahl an Schaltvorgängen aufgrund der zwei Pegelstände wird auch eine elektrische Störaussendung des Verdunsters, welche beispielsweise andere Geräte stören kann, deutlich reduziert.

Der Verdunster ist vorzugsweise ein Verdampfer.

Erreicht wird die Hysterese beispielsweise dadurch, dass der Thermostat in Vertikalrichtung gesehen möglichst weit oben in dem Verdunster angeordnet ist.

Mit Vorteil ist beim ersten Pegelstand die Verdunstungskammer vollständig befüllt und beim zweiten Pegelstand vollständig oder im Wesentlichen entleert.

In weiterer Ausgestaltung der Erfindung ist die Verdunstungskammer von einer Bodenwandung und eine diese umfassende Seitenwandung begrenzt. Der Temperaturregler kann dann zusammen mit seinem Temperaturfühler an der Seitenwandung - insbesondere von einem Fluidraum getrennt - angeordnet sein. Er ist dabei derart zum Fluidraum beabstandet, dass erst ab einem bestimmten Pegelstand des in der Verdunstungskammer aufgenommenen Fluids der Temperaturregler mit seinem Temperaturfühler derart gekühlt ist, dass er die Anschalttemperatur erreicht. Somit kann auf einfache Weise mit einem Abstand des Temperaturreglers zusammen mit seinem Temperaturfühler zum Fluidraum der Pegelstand eingestellt werden, bei dem das erste Heizelement zugeschaltet wird.

Mit Vorteil ist in der Verdunstungskammer eine Wandung als Dampfsperre für den Zuführanschluss ausgebildet. Diese stellt hierbei ein "Labyrinth" für das verdampfte Fluid dar. Die Wandung kann dann einen mit dem Zulaufanschluss verbundenen Zulaufraum begrenzen. Sie ist dabei derart ausgestaltet, dass im Wesentlichen kein verdampftes Fluid in den Zuführanschluss eintreten kann. Der Zulaufraum ist dann über eine Zulauföffnung mit der übrigen Verdunstungskammer verbunden.

Vorzugsweise ist die Verdunstungskammer in einem Gehäuseabschnitt eines Gehäuses ausgebildet, das einfach mit einem Gehäusedeckel verschlossen ist. Hierbei ist denkbar, dass, alternativ zur Anordnung des Temperaturreglers mit seinem Temperaturfühler benachbart zur Seitenwandung, der Temperaturregler im Gehäusedeckel mit dem zweiten Heizelement integriert ist.

Das Gehäuse besteht beispielsweise aus einem Kunststoff, insbesondere einem thermoplastischen Kunststoff, wie beispielsweise Polyphenylensulfid (PPS). Es ist denkbar den Gehäuseabschnitt und den Gehäusedeckel einfach über einen umlaufenden Flansch miteinander zu verbinden. Vorzugsweise ist die Verbindung lösbar. Ist das erste Heizelement im Bereich des Gehäusedeckels angeordnet so ist es vorteilhafterweise beabstandet zur Verdunstungskammer, weswegen es nicht fluiddicht sein muss. Ein weiterer Vorteil einer derartigen Anordnung ist, das das Heizelement leicht zugänglich ist, um es einfach zu montieren und/ oder kontaktieren zu können.

Es ist denkbar, das zweite Heizelement und den Temperaturregler zusammen mit seinen Temperaturfühler an den Gehäuseabschnitt anzusetzen und mit einem zusätzlichen Gehäusewandungsabschnitt abzudecken. Hierdurch sind diese Komponenten von außen obgleich leicht zugänglich, mechanisch geschützt, können einfach montiert und kontaktiert werden und sind vom Innenraum der Verdunstungskammer getrennt, weswegen sie nicht fluiddicht sein müssen.

In die Verdunstungskammer kann in weiterer Ausgestaltung der Erfindung ausgehend von der Boden- und /oder Seitenwandung ein Aufnahmevorsprung ausgeformt sein. In diesem ist dann vorzugsweise ein Aufnahmeraum für das zweite Heizelement und/oder dem Temperaturregler zusammen mit seinem Temperaturfühler vorgesehen. Durch den in die Verdunstungskammer einkragenden Aufnahmevorsprung sind zum Kühlen des Temperaturreglers und des zweiten Heizelements große Wärmeübergangsflächen in der Verdunstungskammer ausgebildet.

Vorzugsweise ist der Aufnahmeraum derart ausgestaltet, dass darin das zweite Heizelement eingesetzt werden kann und dann zusammen mit der Seitenwandung des Gehäuses eine Anlagefläche für den Temperaturregler ausbildet. Dieser kann mit einem Abschnitt an der Seitenwandung anliegen und mit einem weiteren Abschnitt an dem Heizelement.

Der Aufnahmeraum kann zur Bodenwandung hin offen ausgebildet sein, womit von der Bodenwandung her elektrische Kontakte zu dem Heizelement und/oder dem Temperaturregler geführt werden können.

In weiterer Ausgestaltung kann der Aufnahmeraum zweistufig ausgebildet sein. In die erste kleinere Stufe kann dann beispielsweise das Heizelement und in die zweite größere Stufe der Temperaturregler angeordnet werden.

Vorzugsweise sind der Thermostat, also der Temperaturregler zusammen mit seinem Temperaturfühler, und/oder das zweite Heizelement derart angeordnet, dass ein Wärmestrom zwischen diesen Komponenten und der Verdunstungskammer bei fluidleerer Verdunstungskammer geringer ist als bei fluidbefüllter Verdunstungskammer. Hieraus folgt, dass eine thermische Ankopplung zwischen dem Temperaturregler und der Verdunstungskammer im Trockenlauf möglichst schlecht ist, was zu geringen Wärmeverlusten des zweiten Heizelements führt und somit zum Beheizen des Temperaturfühlers bzw. Temperaturreglers ein leistungsschwaches zweites Heizelement eingesetzt werden kann. Dagegen ist dann bei einer Zuführung von Fluid in die Verdunstungskammer eine möglichst gute thermische Ankopplung geschaffen, um den Temperaturregler mit seinem Temperaturfühler unter die Anschalttemperatur abzukühlen.

Die An- und Ausschalttemperatur des Temperaturreglers und/oder des Pegelstands oder der Pegelstände des in der Verdunstungskammer vorgesehenen Fluids kann vorzugsweise anhand einer Einbauposition des Temperaturreglers und seines Temperaturfühlers und/oder durch eine Auswahl der Materialien der einzelnen Komponenten, insbesondere im Hinblick auf deren Wärmeleitfähigkeit, beeinflusst werden.

Damit das erste Heizelement effektiv Wärme in die Verdunstungskammer einbringen kann, steht es im wärmeleitenden Kontakt mit einem in die Verdunstungskammer zumindest abschnittsweise einkragenden Wärmeleitelement.

Das Wärmeleitelement hat bevorzugterweise ein die Verdunstungskammer insbesondere dichtend verschließenden Plattenabschnitt. Somit ist die Verdunstungskammer bis auf ihre Fluidanschlüsse nach außen hin verschlossen, wodurch kein Fluid ungewollt austreten kann.

Von dem Plattenabschnitt erstrecken sich vorzugsweise Wärmeleitrippen in die Verdunstungskammer.

In weiterer Ausgestaltung der Erfindung liegt der Plattenabschnitt auf einer von der Bodenwandung wegweisenden Stirnfläche der Seitenwandung auf. In die Stirnfläche und/oder in den Plattenabschnitt kann dann zum Abdichten der Verdunstungskammer ein Dichtelement, beispielsweise ein O-Dichtring eingesetzt sein.

Eine jeweilige Wärmeleitrippe ist beispielsweise plattenförmig ausgestaltet, wobei sich dann eine Mehrzahl von Wärmeleitrippen etwa im Parallelabstand zueinander erstrecken. Von der Bodenwandung können die Wärmeleitrippen leicht beabstandet sein. Des Weiteren kann eine jeweilige Wärmeleitrippe sich im Querschnitt gesehen in einer Richtung weg vom Plattenabschnitt verjüngen.

Zum Festlegen des ersten Heizelements kann der Plattenabschnitt des Wärmeleitelements eine Aufnahme aufweisen, die auf einer von der Verdunstungskammer wegweisenden Seite des Plattenabschnitts ausgebildet ist.

Mit Vorteil sind die Zu- und Abführöffnungen in Vertikalrichtung gesehen in einem oberen Bereich von der Verdunstungskammer angeordnet. Sie können beispielsweise jeweils als rohrförmiger Fluidkanal ausgebildet sein, die sich ausgehend von der Verdunstungskammer weg von dieser erstrecken. Sie sind beispielsweise in einer gemeinsamen sich etwa horizontal erstreckenden Ebene angeordnet. Die Zu- und Abführöffnungen sind in weiterer Ausgestaltung der Erfindung auf gegenüberliegenden Seiten der Seitenwandung angeordnet, wodurch ein Zuführbereich und ein Abführbereich vorteilhafterweise weitestgehend auseinander liegen.

Zur Stromverteilung und/oder Energieversorgung der Schaltung und/oder des Verdunsters ist vorzugsweise eine Platine vorgesehen, wodurch keine störenden und schwer zu handhabenden Kabel oder Leitungen eingesetzt werden müssen.

Im Folgenden wird eine bevorzugte Ausführungsform der Erfindung anhand von Zeichnungen näher erläutert. Diese zeigen:
Figur 1 in einer Seitenansicht einen erfindungsgemäßen Verdunster zusammen mit einer erfindungsgemäßen Schaltung gemäß einer Ausführungsform,
Figur 2 in einem Längsschnitt entlang der Schnittlinie B-B aus Figur 1 den Verdunster,
Figur 3 in mehreren Diagrammen Betriebszustände des erfindungsgemäßen Verdunsters,
Figur 4 und 5 jeweils in einer perspektivischen Darstellung den erfindungsgemäßen Verdunster,
Figur 6 in einem Längsschnitt entlang der Schnittlinie A-A aus Figur 1 den Verdunster und
Figur 7 in einem Längsschnitt entlang der Schnittlinie C-C aus Figur 6 den Verdunster.

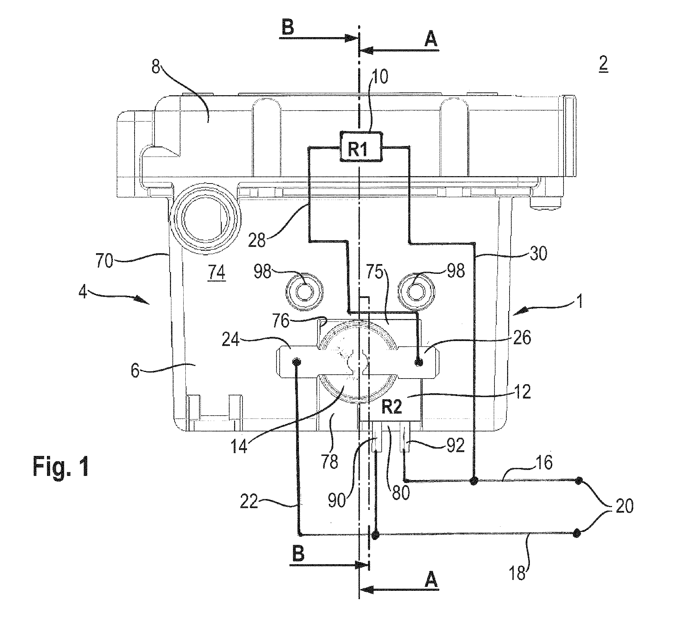

Gemäß Figur 1 ist eine erfindungsgemäße Schaltung 1 zusammen mit einem als Durchlaufverdunster ausgebildeten Verdunster 2 dargestellt. Mit dem Verdunster 2 wird beispielsweise ein von einer Klimaanlage abgeführtes Fluid (Kondensflüssigkeit) erhitzt, um dieses zu verdampfen.

Der Verdunster 2 hat ein Gehäuse 4 mit einem topfförmigen Gehäuseabschnitt 6, in dem eine in der Figur 1 nicht dargestellte Verdunstungskammer vorgesehen ist. Der Gehäuseabschnitt 6 ist von einem Gehäusedeckel 8 verschlossen. In diesem ist ein in der Figur 1 schematisch dargestelltes erstes Heizelement 10 angeordnet, um das Fluid in der vom Gehäuseabschnitt 6 begrenzten Verdunstungskammer zu verdampfen. Das erste Heizelement 10 ist Teil der Schaltung 1, die des Weiteren ein zweites Heizelement 12 und einen Thermostaten 14, also einen Temperaturregler 14 mit einem Temperaturfühler aufweist. Das zweite Heizelement 12 dient im Wesentlichen dazu, den Temperaturregler 14 bzw. dessen Temperaturfühler zu erwärmen, was untenstehend näher erläutert ist. Die Schaltung 1 dient wiederum dazu das erste Heizelement 10 nur bei Bedarf zu bestromen, also wenn Fluid oder ein bestimmter Pegelstand des Fluids im Verdunster 2 vorhanden ist. Bei den Heizelementen 10 und 12 handelt es sich um PTC-Heizelemente.

Das zweite Heizelement 12 ist über eine erste Anschlussleitung 16 und über eine zweite Anschlussleitung 18 mit einer Stromquelle 20 verbunden. Von der Anschlussleitung 18 zweigt eine Zweigleitung 22 ab, die mit einer Kontaktfahne 24 des Temperaturreglers 14 zur elektrischen Kontaktierung verbunden ist. An einer weiteren Kontaktfahne 26 des Temperaturreglers 14 ist das erste Heizelement 10 mit einer Verbindungsleitung 28 angeschlossen. Des Weiteren ist das erste Heizelement 10 über eine Zweigleitung 30 an die Anschlussleitung 16 angeschlossen. Somit sind der Temperaturregler 14 und das erste Heizelement 10 elektrisch in Reihe angeordnet und das zweite Heizelement 12 ist parallel zu diesen angeordnet.

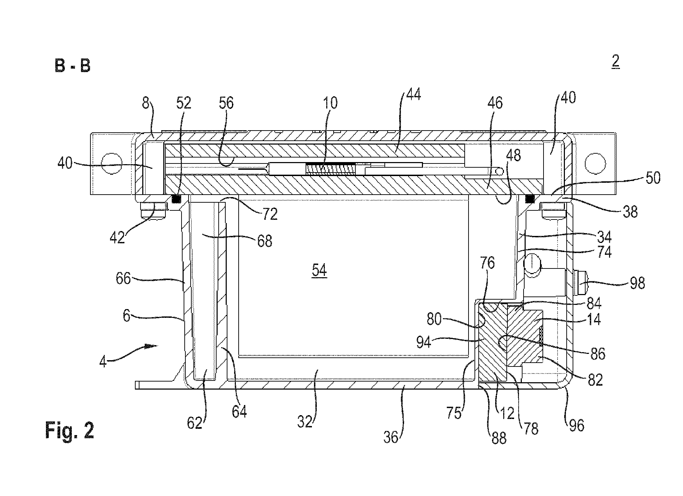

Gemäß dem Längsschnitt in Figur 2 entlang der Schnittlinie B-B aus Figur 1 ist eine innere Ausgestaltung des Verdunsters 2 ersichtlich. Die Verdunstungskammer 32 des Gehäuseabschnitts 6 ist in diesem über eine sich etwa in Vertikalrichtung erstreckende Seitenwandung 34 und einer sich etwa in Horizontalrichtung erstreckenden Bodenwandung 36 begrenzt. Die Bodenwandung 36 ist im Wesentlichen rechteckförmig ausgestaltet, wobei sich dann die Seitenwandung 34 etwa in Vertikalrichtung von dieser weg erstreckt. Die Seitenwandung 34 hat an ihrem von der Bodenwandung 36 wegweisenden Endabschnitt einen äußeren Flansch 38, über den der Gehäusedeckel 8 mit dem Gehäuseabschnitt 6 lösbar verbunden ist. Hierfür sind Schrauben 40 vorgesehen. Diese liegen mit ihren Schraubenköpfen an einer zur Bodenwandung 36 weisenden Anlagefläche 42 des Flansches 38 an, durchsetzten den Flansch 38 mit ihren Gewindeabschnitten und greifen über diese in entsprechende Gewindeaufnahmen des Gehäusedeckels 8 ein.

In dem Gehäusedeckel 8 ist das erste Heizelement 10 in einem Wärmeleitelement 44 angeordnet. Dieses hat einen die Verdunstungskammer 32 verschließenden Plattenabschnitt 46. Dieser wiederum hat eine etwa ebene sich im Wesentlichen in Horizontalrichtung erstreckende Plattenfläche 48. Mit dieser liegt er dichtend auf einer weg von der Bodenwandung 36 weisenden Stirnfläche 50 der Seitenwandung 34 an. Zum Abdichten ist in die Stirnfläche 50 eine Ringnut 52 eingebracht, in die ein Dichtmittel in Form eines O-Dichtrings angeordnet ist. Von dem Plattenabschnitt 46 aus erstrecken sich plattenförmige Wärmeleitrippen 54 in die Verdunstungskammer 32. Über diese kann Wärme vom ersten Heizelement 10 effektiv zu dem in der Verdunstungskammer 32 vorgesehenen Fluid geleitet werden. Das Wärmeleitelement 44 hat des Weiteren auf seiner von den Wärmeleitrippen 54 weg weisenden Seite des Plattenabschnitts 46 eine Aufnahme 56. In diese ist das erste Heizelement 10 eingesetzt. Das Wärmeleitelement 44 ist über den Gehäuseabschnitt 6 und den Gehäusedeckel 8 lagefixiert.

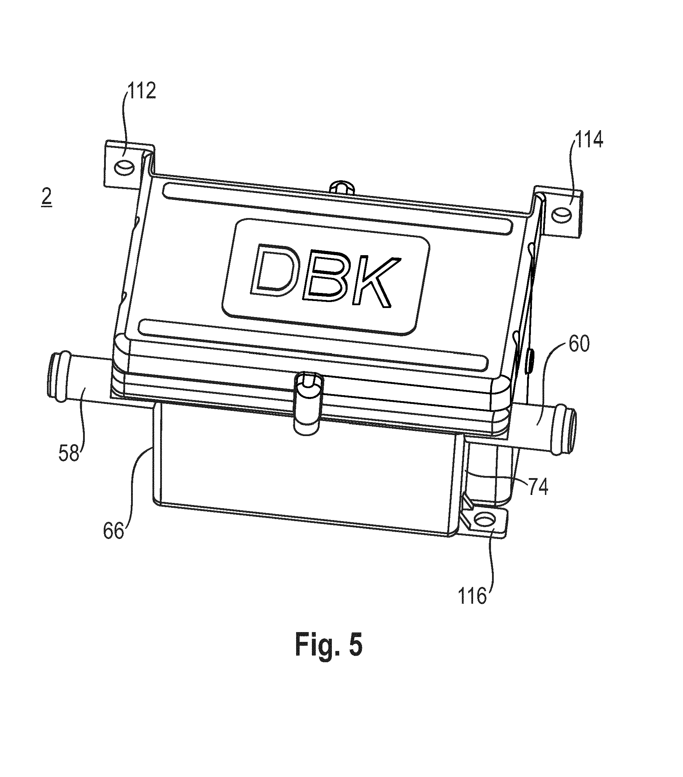

Zum Zu- und Abführen des Fluids hat der Verdunster 2 aus Figur 2 einen Zuführund einen Abführanschluss 58 und 60, die beispielsweise in Figur 5 dargestellt sind. Der Zuführanschluss 58 mündet in einem in Figur 2 dargestellten Zulaufraum 62. Dieser ist über eine Wandung 64 abschnittsweise von der übrigen Verdunstungskammer 32 getrennt. Die Wandung 64 dient als Dampfsperre, damit das verdampfte Fluid nicht zurück in den Zuführanschluss 58, siehe beispielsweise Figur 5, strömen kann. Die Wandung 64 erstreckt sich gemäß Figur 2 etwa im Parallelabstand zu einem sich in die Zeichenebene hinein erstreckenden Wandungsabschnitt 66 der Seitenwandung 34. Die Wandung 64 ist hierbei in Richtung der Zeichenebene kürzer als der Wandungsabschnitt 66 ausgestaltet und dann mit diesem über einen Verbindungsabschnitt 68 verbunden. Die Wandung 64 erstreckt sich dabei in Richtung der Zeichenebene ausgehend von dem Wandungsabschnitt 70, siehe Figur 1, der Seitenwandung 34. Die Wandung 64 erstreckt sich in Vertikalrichtung gesehen ausgehend von der Bodenwandung 36 und ist etwas kürzer als die Seitenwandung 34, wodurch sie vom Plattenabschnitt 46 des Wärmeleitelements 44 beabstandet ist. Somit kann Fluid aus dem Zulaufraum 62 in die übrige Verdunstungskammer 32 über eine Öffnung fließen, die von einer zum Wärmeleitelement 44 weisenden Stirnfläche 72 der Wandung 64 und dem Wärmeleitelement 44 begrenzt ist.

An dem den Wandungsabschnitt 66 gegenüberliegenden Wandungsabschnitt 74 der Seitenwandung 34 sind das zweite Heizelement 12 und der Temperaturregler 14 hintereinander angeordnet. Zur Anordnung dieser Komponenten weist die Seitenwandung 34 im Bereich des Wandungsabschnitts 74, siehe auch Figur 1, einen Aufnahmevorsprung 75 auf. Dieser bildet in der Verdunstungskammer 32 eine Stufe zwischen der Seitenwandung 34 und der Bodenwandung 36. Der Aufnahmevorsprung 75 ist gemäß Figur 1 in Horizontalrichtung gesehen etwa mittig des Wandungsabschnitts 74 in diesen eingebracht. Im Querschnitt gesehen, etwa entlang einer Flächennormalen des Wandungsabschnitts 74, ist der Aufnahmevorsprung 75 etwa rechteckförmig ausgestaltet.

In dem Aufnahmevorsprung 75 ist gemäß Figur 2 ein zweistufiger Aufnahmeraum 76 ausgebildet. Dieser hat gemäß Figur 1 eine erste Stufe mit einem Stufengrund 78, der sich etwa im Parallelabstand zum im Wesentlichen ebenen Wandungsabschnitt 74 erstreckt. Ausgehend vom Stufengrund 78 ist eine zweite Stufe vorgesehen mit einem Stufengrund 80, der sich etwa im Parallelabstand zum Stufengrund 78 erstreckt. In die zweite Stufe mit dem Stufengrund 80 ist das zweite Heizelement 12 eingesetzt, siehe Figur 2, das die zweite Stufe des Aufnahmeraums 76 im Wesentlichen ausfüllt und zusammen mit dem Stufengrund 78 eine Anlagefläche für den Temperaturregler 14 bildet. Dieser hat ein im Querschnitt gesehen etwa kreiszylindrisches Reglergehäuse 82 mit einem Radialbund 84. Das Reglergehäuse 82 liegt dann mit seiner zum zweiten Heizelement 12 weisenden Stirnfläche 86 an der durch das Heizelement 12 und den Stufengrund 78 gebildeten Anlagefläche im Wesentlichen an. Gemäß Figur 1 liegt die kreisförmige Stirnfläche 86 dabei mit ihrer ersten Hälfte am Stufengrund 78 und mit ihrer zweiten Hälfte am zweiten Heizelement 12 an.

Der Aufnahmeraum 76 ist gemäß Figur 2 zur Bodenwandung 36 hin mit einer Öffnung 88 offen ausgebildet. Über diese kragen gemäß Figur 1 Litzen 90 und 92 des zweiten Heizelements 12 aus, um dieses mit der Anschlussleitung 16 bzw. 18 aus Figur 1 elektrisch zu kontaktieren.

Die Litzen 90 und 92 sind mit dem zweiten Heizelement 12 beispielsweise verlötet und werden zusammen mit diesem mit Silikon umspritzt, das ein Gehäuse 94, siehe Figur 2, des zweiten Heizelements 12 bildet. Dieses ist etwa quaderförmig ausgestaltet. Zum Schutz des an der Seitenwandung 34 gemäß Figur 1 angeordneten Heizelements 12 und des Temperaturreglers 14 weist das Gehäuse 4 des Verdunsters 2 einen Gehäusewandungsabschnitt 96 auf. Dieser ist über eine Schraubverbindung 98, siehe auch Figur 1, mit dem Gehäuseabschnitt 6 verschraubt.

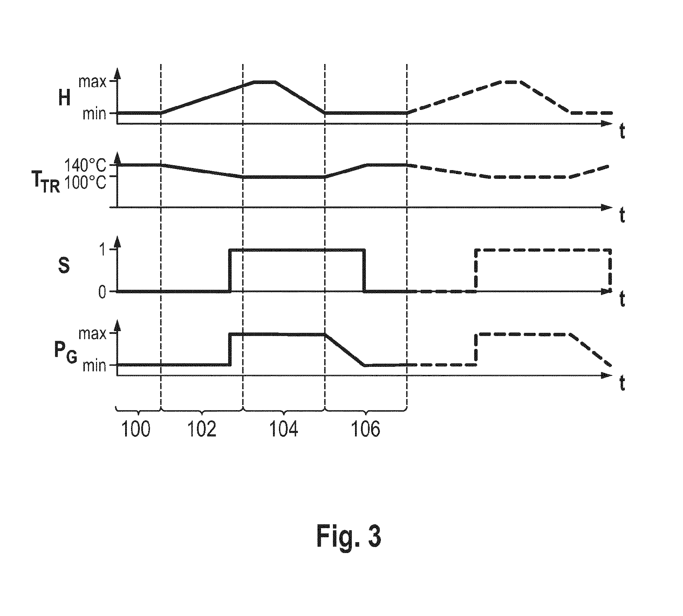

Im Folgenden wird die Funktion des Verdunsters 2 aus den Figuren 1 und 2 anhand der Figur 3 näher erläutert. Gemäß Figur 3 sind vier Ablaufdiagramme übereinander angeordnet. Eine Abszisse eines jeweiligen Ablaufdiagramms weist die Zeit t auf. Auf der Ordinate des obersten Ablaufdiagramms ist ein Pegelstand H des im Verdunsters 2 befindlichen Fluids abgebildet. Hierbei handelt es sich gemäß Figur 2 um den Pegelstand ausgehend von der Bodenwandung 36 vertikal nach oben hin zum Plattenabschnitt 46 des Wärmeleitelements 44. Das folgende unter dem Ablaufdiagramm des Pegelstands H angeführte Ablaufdiagramm zeigt auf seiner Ordinate eine Temperatur T_{TR} des Temperaturreglers 14, siehe auch Figur 2. Das nächste Ablaufdiagramm stellt auf seiner Ordinate einen Schaltzustand S des Temperaturreglers 14 dar. Bei "0" ist der Temperaturregler offen, womit eine Stromverbindung zwischen der Anschlussleitung 18 aus Figur 1 und der Verbindungsleitung 28 unterbrochen ist. Der Zustand "1" kennzeichnet dabei einen geschlossenen Zustand des Temperaturreglers 14. Nach dem Schaltzustand S ist noch im folgenden Ablaufdiagramm die Gesamtleistung P_{G} der Schaltung auf der Ordinate aufgetragen.

Ein erster Zeitabschnitt einer jeweiligen Abszisse in Figur 3 stellt einen Trockenlauf 100 dar. Hierbei ist der Pegelstand H des Fluids in der Verdunstungskammer 32 minimal. Hierdurch findet kaum oder keine Kühlung des Temperaturreglers 14 in Figur 2 zusammen mit seinem Temperaturfühler durch das Fluid in der Verdunstungskammer 32 statt. Der Temperaturregler 14 wird dann durch das zweite Heizelement 12, das dauerbestromt an die Stromquelle 20 angeschlossen ist, auf etwa eine Temperatur T_{TR} in Höhe von > 130°C erwärmt. Bei dieser Temperatur handelt es sich um eine Abschalttemperatur des Temperaturreglers 14 bei der das erste Heizelement 10 von der Stromquelle 20 getrennt ist. Der Schaltzustand S des Temperaturreglers 14 ist damit 0. Der Verdunster 2 benötigt in dem Trockenlauf 100 lediglich eine elektrische Leistung, um das zweite Heizelement 12 betreiben zu können. Dessen Leistung ist deutlich geringer als die des ersten Heizelements 10 und beträgt beispielsweise etwa 10% der minimalen Leistung des ersten Heizelements 10. Beispielsweise ist für das zweite Heizelement 12 eine Leistung zwischen 3 und 4 Watt vorgesehen. Somit beträgt die Gesamtleistung P_{G} im Trockenlauf 100 etwa 3 oder 4 Watt und ist minimal.

Der in Figur 3 zweite Zeitabschnitt stellt eine Flüssigkeitszuführung 102 in die Verdunstungskammer 32 dar. Hierdurch steigt der Pegelstand H etwa linear an. Durch den ansteigenden Pegelstand H wird der Temperaturregler 14 zusammen mit seinem Temperaturfühler trotz Wärmezufuhr vom zweiten Heizelement 12 durch das Fluid in der Verdunstungskammer 32 gekühlt. Des Weiteren wird auch das zweite Heizelement 12 gekühlt. Nach einer bestimmten Zeit erreicht er hierbei seine Temperatur (Anschalttemperatur) T_{TR} in Höhe von etwa 100°C bei der er den Kontakt zwischen der Stromquelle 20 aus Figur 1 und dem ersten Heizelement 10 schließt, wodurch dieses bestromt ist. Der Schaltzustand S ist somit "1". Durch das Zuschalten des zweiten Heizelements 12 steigt die Gesamtleistung P_{G} des Verdunsters 2 an.

Der folgende Zeitabschnitt in Figur 3 stellt eine Verdampfung 104 dar. Eine Verdampfung des Fluids in der Verdunstungskammer 32 hält die Temperatur T_{TR} des Temperaturreglers 14 etwa bei 100°C womit dieser eingeschaltet bleibt und der Schaltzustand somit weiterhin 1 beträgt. Durch die Verdampfung des Fluids sinkt nach einer bestimmten Zeit t der Pegelstand H der Flüssigkeit in der Verdunstungskammer 32 ab bis er wieder minimal ist.

Der nächste Zeitabschnitt in Figur 3 stellt eine vollständige Verdampfung 106 der Flüssigkeit in der Verdunstungskammer 32 dar. Der Pegelstand H ist hierbei erneut minimal, wodurch der Temperaturregler 14 über das Fluid nicht mehr ausreichend gekühlt wird. Er wird dann über das zweite Heizelement 12 erwärmt, womit seine Temperatur ansteigt. Bei Erreichen seiner Abschalttemperatur in Höhe von > 130°C trennt er den Kontakt zwischen dem ersten Heizelement 10 und der Stromquelle 20 aus Figur 1, womit der Schaltzustand 0 ist. In dem Abschnitt der vollständigen Verdampfung 106 ist des Weiteren ersichtlich, dass die Gesamtleistung P_{G} bei noch eingeschaltetem erstem Heizelement 10 etwa linear abnimmt, da deren Leistungsaufnahme mit steigender Temperatur aufgrund des einsetzenden PTC-Effekts sinkt.

Durch das zweite Heizelement 12 wird der Temperaturregler 14 dann solange mit seiner Abschalttemperatur in Höhe von etwa > 130°C erwärmt, bis wieder Fluid in der Verdunstungskammer 32 zugeführt wird. Somit wird ohne eine elektronische Steuerung das erste Heizelement 10 nur bei Bedarf zugeschaltet.

Vorzugsweise ist der Verdunster 2 derart ausgestaltet, dass eine thermische Ankopplung des Temperaturreglers 14 und des zweiten Heizelements 12 im Trockenlauf 100 möglichst schlecht ist, um eine Verlustwärme des zweiten Heizelements 12 zum Halten der Abschalttemperatur gering zu halten. Dagegen ist vorteilhaft, wenn die thermische Ankopplung bei vorhandenem Fluid in der Verdunstungskammer 32 möglichst gut ist, um eine schnelle Abkühlung des Temperaturreglers 14 auf seine Wiedereinschalttemperatur zu ermöglichen.

Gemäß Figur 3 ist auch ersichtlich, dass eine Abkühlung des Temperaturreglers 14 bei der Flüssigkeitszuführung 102 eine längere Zeit in Anspruch nimmt als eine Erwärmung in dem Abschnitt der vollständigen Verdampfung 106. Dies folgt daraus, dass bei der vollständigen Verdampfung 106 das erste Heizelement 10 bis zu seinem Abschalten zusätzlich zum zweiten Heizelement 12 den Temperaturregler 14 erhitzt.

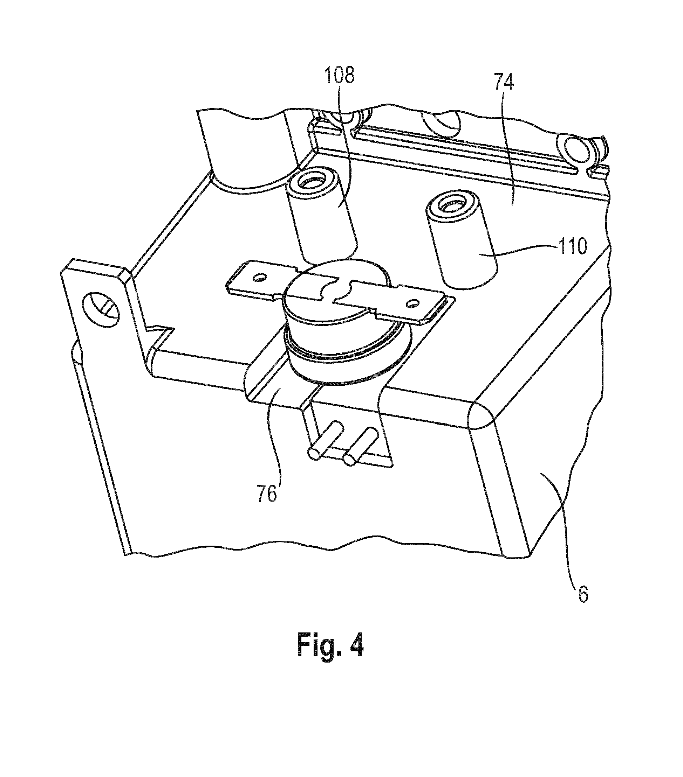

Gemäß Figur 4 ist der stufige Aufbau des Aufnahmeraums 76 erkennbar. Zum Befestigen des Gehäusewandungsabschnitts 96 aus Figur 2 sind an dem Gehäuseabschnitt 6 an dessen Wandungsabschnitt 74 zwei Vorsprünge 108 und 110 ausgebildet. Diese erstrecken sich etwa in Normalrichtung weg von dem Wandungsabschnitt 74. Sie sind jeweils etwa hohlzylindrisch ausgestaltet und dienen zur Aufnahme eines Gewindeabschnitts einer Schraube der Schraubverbindung 98 aus Figur 2.

Gemäß Figur 5 sind zum Befestigen des Verdunsters 2 mehrere Flansche 112 bis 116 erkennbar. Die Anschlüsse 58 und 60 sind etwa koaxial zueinander angeordnet und erstrecken sich etwa in Normalrichtung zum Wandungsabschnitt 66 bzw. 74.

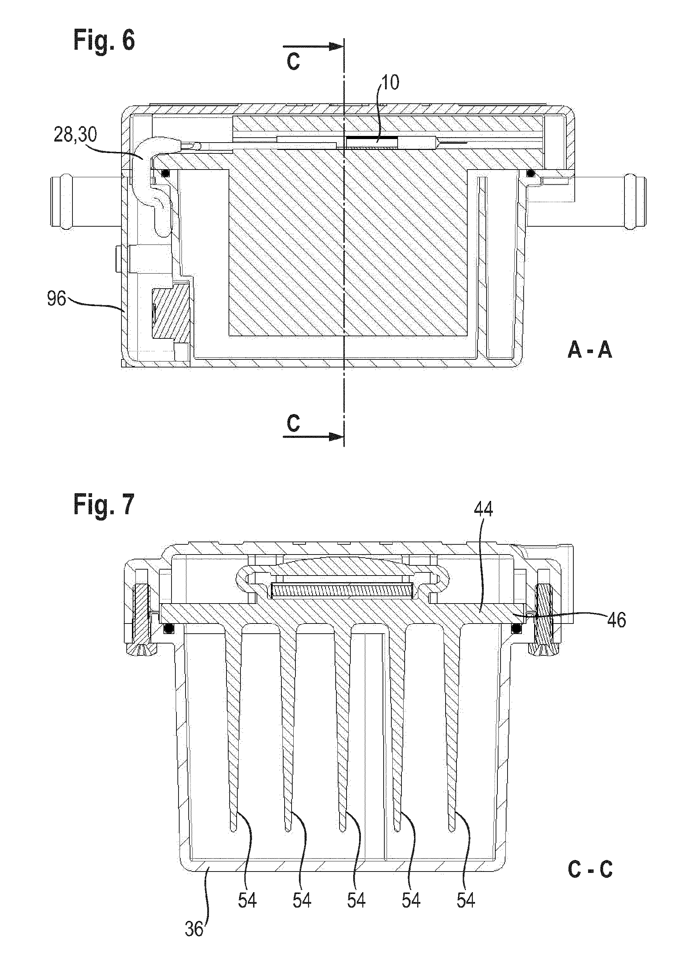

In dem Längsschnitt gemäß Figur 6 entlang der Schnittlinie A-A aus Figur 1 ist die elektrische Kontaktierung des ersten Heizelements 10 ersichtlich. Die Verbindungsleitung 28 und die Zweigleitung 30 werden hierbei gemeinsam vom Gehäusedeckel 8 aus in den vom Gehäuseabschnitt 96 begrenzten Raum geführt.

In dem Querschnitt gemäß Figur 7 entlang der Schnittlinie C-C aus Figur 6 sind die Wärmeleitrippen 54 des Wärmeleitelements 44 erkennbar. Diese sind etwa im Parallelabstand zueinander angeordnet und verjüngen sich in ihrem Querschnitt ausgehend von dem Plattenabschnitt 46 hin zur Bodenwandung 36. Insgesamt sind fünf Wärmeleitrippen 54 vorgesehen.

Offenbart ist eine Schaltung mit einem Temperaturregler mit dem ein elektrischer Kontakt zwischen einem ersten Heizelement und einer Stromquelle auf- und zusteuerbar ist. Ab einer Abschalttemperatur des Temperaturreglers wird hierbei der Kontakt abgeschaltet und bei einer Einschalttemperatur, die vorzugsweise unterhalb der Abschalttemperatur liegt, eingeschaltet. Mit einem zweiten Heizelement ist der Temperaturfühler auf seine Abschalttemperatur erwärmbar. Hierfür ist das zweite Heizelement benachbart zu diesem angeordnet.

Des Weiteren ist ein Verdunster offenbart, der eine derartige Schaltung aufweist, womit mit dem ersten Heizelement ein Fluid in einer Verdunstungskammer erwärmt werden kann und der Temperaturfühler durch das Fluid gekühlt werden kann.

### Bezugszeichenliste:

- 1: Schaltung
- 2: Verdunster
- 4: Gehäuse
- 6: Gehäuseabschnitt
- 8: Gehäusedeckel
- 10: erstes Heizelement
- 12: zweites Heizelement
- 14: Temperaturregler mit Temperaturfühler / Thermostat
- 16: Anschlussleitung
- 18: Anschlussleitung
- 20: Stromquelle
- 22: Zweigleitung
- 24: Kontaktfahne
- 26: Kontaktfahne
- 28: Verbindungsleitung
- 30: Zweigleitung
- 32: Verdunstungskammer
- 34: Seitenwandung
- 36: Bodenwandung
- 38: Flansch
- 40: Schrauben
- 42: Anlagefläche
- 44: Wärmeleitelement
- 46: Plattenabschnitt
- 48: Plattenfläche
- 50: Stirnfläche
- 52: Ringnut
- 54: Wärmeleitrippe
- 56: Aufnahme
- 58: Zuführanschluss
- 60: Abführanschluss
- 62: Zulaufraum
- 64: Wandung
- 66: Wandungsabschnitt
- 68: Verbindungsabschnitt
- 70: Wandungsabschnitt
- 72: Stirnfläche
- 74: Wandungsabschnitt
- 75: Aufnahmevorsprung
- 76: Aufnahmeraum
- 78: Stufengrund
- 80: Stufengrund
- 82: Reglergehäuse
- 84: Radialbund
- 86: Stirnfläche
- 88: Öffnung
- 90: Litze
- 92: Litze
- 94: Gehäuse
- 96: Gehäusewandungsabschnitt
- 98: Schraubverbindung
- 100: Trockenlauf
- 102: Flüssigkeitszuführung
- 104: Verdampfung
- 106: vollständige Verdampfung
- 108: Vorsprung
- 110: Vorsprung
- 112: Flansch
- 114: Flansch
- 116: Flansch
- t: Zeit
- H: Pegelstand
- T_{TR}: Temperatur des Temperaturreglers
- S: Schaltzustand
- P_{G}: Gesamtleistung

## Patentansprüche

1. Schaltung mit einem einen Temperaturfühler aufweisenden Temperaturregler (14), der bei Erreichen einer vorbestimmten vom Temperaturfühler erfassten ersten Temperatur einen elektrischen Kontakt zwischen einer Stromquelle (20) und einem ersten elektrischen Heizelement (10) öffnet, und bei Unterschreiten einer zweiten Temperatur den Kontakt schließt, **dadurch gekennzeichnet, dass** ein an die Stromquelle (20) angeschlossenes zweites dem Temperaturfühler beigeordnetes elektrisches Heizelement (12) vorgesehen ist.

2. Schaltung nach Anspruch 1, wobei die erste Temperatur überhalb einer Verdampfungstemperatur eines zu erwärmenden Fluids und die zweite Temperatur größer oder gleich wie die Verdampfungstemperatur und kleiner wie die erste Temperatur ist.

3. Schaltung nach Anspruch 1 oder 2, wobei eine Leistung des zweiten Heizelements (12) einen Bruchteil der Leistung des ersten Heizelements (10) beträgt.

4. Schaltung nach einem der Ansprüche 1 bis 3, wobei der Temperaturregler (14) mit seinem Temperaturfühler in einem Reglergehäuse (82) angeordnet ist, an das das zweite Heizelement (12) angrenzt oder in dem das zweite Heizelement (12) angeordnet ist.

5. Schaltung nach einem der vorhergehenden Ansprüche, wobei die Heizelemente PTC-Heizelemente sind.

6. Verdunster mit einer Schaltung (1) gemäß einem der vorhergehenden Ansprüche, wobei dieser eine Verdunstungskammer (32) mit einem Zuführanschluss (58) und einem Abführanschluss (60) aufweist.

7. Verdunster nach Anspruch 6, wobei dieser derart ausgestaltet ist, dass bei Erreichen und/ oder Überschreiten eines ersten hohen Pegelstands des Fluids in der Verdunstungskammer (32) vom Temperaturfühler (14) ein Erreichen und/oder Unterschreiten der zweiten Temperatur erfassbar ist, womit das erste Heizelement (10) eingeschaltet ist, und dass bei Erreichen und/oder Unterschreiten eines zweiten niedrigen Pegelstands des Fluids in der Verdunstungskammer (32) vom Temperaturfühler (14) ein Erreichen und/oder Überschreiten der ersten hohen Temperatur erfassbar ist, womit das erste Heizelement (10) ausgeschaltet ist.

8. Verdunster nach Anspruch 6 oder 7, wobei die Verdunstungskammer (32) eine Bodenwandung (36) und eine sich davon weg erstreckende und diese umfassende Seitenwandung (34) aufweist, wobei der Temperaturregler (14) an der Seitenwandung (34) angeordnet ist.

9. Verdunster nach einem der Ansprüche 6 bis 8, wobei in der Verdunstungskammer (32) eine Wandung (64) als Dampfsperre für den Zuführanschluss (58) ausgebildet ist.

10. Verdunster nach einem der Ansprüche 6 bis 9, wobei die Verdunstungskammer (32) in einem Gehäuseabschnitt (6) eines Gehäuses (4) ausgebildet ist, das von einem Gehäusedeckel (8) verschlossen ist.

11. Verdunster nach einem der Ansprüche 8 bis 10, wobei sich in der Verdunstungskammer (32) ausgehend von der Boden- und/oder Seitenwandung (36, 34) ein Aufnahmevorsprung (75) erstreckt, in dem ein Aufnahmeraum (76) für das zweite Heizelement (12) und/oder den Temperaturregler (14) vorgesehen ist.

12. Verdunster nach Anspruch 11, wobei der Aufnahmeraum (76) zweistufig ausgebildet ist, wobei in der zweiten Stufe das erste Heizelement (10) und in der ersten Stufe der Temperaturregler (14) angeordnet ist.

13. Verdunster nach einem der Ansprüche 6 bis 12, wobei das erste Heizelement (10) in wärmeleitenden Kontakt mit einem in die Verdunstungskammer (32) zumindest abschnittsweise einkragenden Wärmeleitelement (44) steht.

14. Verdunster nach Anspruch 13, wobei das Wärmeleitelement (44) einen die Verdunstungskammer (32) verschließenden Plattenabschnitt (46) hat.

15. Verdunster nach Anspruch 13 oder 14, wobei sich Wärmeleitrippen (54) ausgehend vom Plattenabschnitt (46) in die Verdunstungskammer (32) erstrecken.
